# FASCICULE DE BREVET EUROPEEN

(11) **EP 1 028 068 B1**
(45) Date de publication et mention de la délivrance du brevet: **05.02.2003**
(21) Numéro de dépôt: 99200394.7
(22) Date de dépôt: 12.02.1999
(51) Int. Cl.: B65D 77/30, A47J 31/40

(54) **Cartouche de recharge pour dispositif de distribution de boisson et dispositif adapté à une telle cartouche**
Nachfüllkartusche für eine Getränke-Abgabevorrichtung und an solche Kartuschen angepasste Vorrichtung
Refill cartridge for a beverage dispensing apparatus and apparatus adapted to such a cartridge

(43) Date de publication de la demande: 16.08.2000
(73) Titulaire: SOCIETE DES PRODUITS NESTLE S.A., 1800 Vevey (CH)
(72) Inventeur: Jeannin, Bernard, 1010 Lausanne (CH); Masek, Petr, 1614 Granges (CH); Bardin, Ennio, 1350 Orbe (CH)
(74) Mandataire: Vuille, Roman

(56) Documents cités:
- EP-A- 0 387 986
- EP-A- 0 419 290
- US-A- 3 812 273
- US-A- 4 799 591
- US-A- 5 169 137
- US-A- 5 237 910

## Description

L'invention se rapporte au domaine des appareils de distribution automatique de boissons, sauces ou autres produits tout préparés sur demande. En particulier, l'invention concerne les dispositifs de distribution qui utilisent des substances pulvérulentes telles que des poudres solubles du type café, thé, chocolat ou autres, et qui doivent être rechargés de manière régulière. Avantageusement, l'invention concerne les appareils de distribution de boissons utilisés pour assurer le service aux passagers dans les avions, trains ou autres moyens de transport bénéficiant d'un service de restauration. L'invention trouve aussi une application aux dispositifs de distribution automatique de boissons installés dans les lieux publics équipés de monnayeur.

L'alimentation des appareils de distribution de boissons ou autres en substances pulvérulentes solubles doit être faite régulièrement et en quantité suffisante pour assurer le service successif de plusieurs consommateurs. En général, l'alimentation se fait manuellement par remplissage de poudre conditionnée "en vrac" dans un réservoir du distributeur au moyen d'un doseur ou d'un sachet, par exemple. Cette méthode n'est pas satisfaisante car elle consomme du temps de service à la personne réalisant cette tâche. Elle peut être aussi salissante surtout lorsque le distributeur est installé dans des conditions instables ou turbulentes, comme ce peut être le cas dans un avion. Cela peut aussi avoir pour conséquence une perte non négligeable de poudre. En plus, la répartition de la poudre dans le système de dosage (par exemple, vis doseuse) peut être variable selon les cas pouvant ainsi conduire à des variations importantes de concentrations des produits distribués.

Il existe des distributeurs qui sont conçus pour recevoir des cartouches ou conteneurs remplis de substances pulvérulentes solubles lesquels sont ouverts avant leur introduction dans le dispositif de distribution. Le document GB 1 325 478 enseigne, par exemple, un tel principe. Dans ce cas particulier, le container comprend une bande adhésive qui est délaminée avant l'assemblage du conteneur dans le dispositif. L'inconvénient vient de ce que l'opération d'assemblage se fait alors que le conteneur est entièrement ouvert, conduisant ainsi aux même inconvénients que ceux précédemment cités.

Il existe aussi des dispositifs de distribution automatique tels que ceux divulgués dans le brevet US-A-5,237,910 où l'ouverture du sachet se fait par découpage du fond du sachet au moyen d'un système de découpe logé à l'intérieur du dispositif. Un tel système est relativement compliqué, coûteux et de plus encombrant pour pouvoir être utilisé dans des espaces restreints tels que dans les avions.

Il existe donc un réel besoin de disposer d'un principe de recharge de distributeurs en substances du type pulvérulente ou équivalentes qui soit d'utilisation simple, rapide, sans perte de matière, et, le cas échéant, pouvant être mis en oeuvre dans un espace disponible limité.

L'objet de la présente invention est donc de répondre à ces attentes en proposant un élément de recharge qui est conçu pour libérer sa substance dans le dispositif sans qu'il soit nécessaire de réaliser l'ouverture préalable de l'élément et sans prévoir de systèmes de découpe intégrés dans le dispositif de distribution.

Des cartouches évitant l'ouverture préalable de la cartouche ont déja été développées dans le domaine des photocopieurs (voir document EP-A-0 419 290 ou EP A-0 387 986).

Pour cela l'invention concerne un élément de recharge en substance alimentaire pour dispositif de distribution automatique de boissons, sauces ou- autres produits sur demande. L'élément de recharge comprend un récipient contenant une quantité prédéterminée de la substance à recharger dans le dispositif et un moyen de fermeture coopérant avec le récipient pour former une enceinte close. Le moyen de fermeture comprend des moyens permettant le détachement au moins partiel du moyen de fermeture sous l'effet de l'introduction de l'élément de recharge dans le dispositif de distribution automatique ou après mise en place de l'élément de recharge dans le dispositif.

Les moyens de détachement sont formés d'une portion libre repliable, actionable en détachement, du moyen de fermeture s'étendant, en partie au moins, au-delà de la limite du récipient sur laquelle sont prévus les moyens permettant le détachement du moyen de fermeture.

"De plus, l'élément de recharge comprend de moyens de guidage pour s'engager en glissement dans un logement ménagé dans une zone d'accueil du dispositif et est adapté pour s'insérer dans le logement de façon à constituer, une fois mis en place dans le logement, une partie d'un sous-ensemble d'approvisionnement en substance du dispositif."

L'ouverture de l'élément est ainsi simplifiée grâce à la possibilité d'exercer directement sur l'élément de recharge une action sur le moyen de fermeture au moment de l'introduction ou après l'introduction de l'élément dans le dispositif. Par directement, il faut entendre qu'aucun ustensile de découpe ou équivalent faisant partie du dispositif n'est nécessaire à l'ouverture.

Dans un premier mode possible, la portion libre du moyen de fermeture comprend au moins un moyen d'accrochage mécanique destiné à s'engager avec une partie de retenue du dispositif, complémentaire du moyen d'accrochage mécanique de façon maintenir la portion libre en place et assurer ainsi le détachement au moins partiel du moyen de fermeture par rapport au récipient lors de l'introduction de l'élément de recharge dans le dispositif de distribution. La complémentarité s'entend tant au niveau d'une adaptation des formes, qu'au niveau de la structure interdépendante des moyens d'accrochage/retenue pour réaliser la fonction de maintien en place de la portion libre.

Dans une solution alternative, le moyen de fermeture comprend une portion proprement dite de fermeture du récipient et une portion libre atteignable manuellement après la mise en place de la recharge dans le dispositif.

Selon l'invention, le moyen de fermeture est préférentiellement un film souple assemblé par adhésion ou scellage sur des bords de guidage du récipient de sorte que le détachement du moyen de fermeture s'opère par délamination d'une portion au moins du film le long des bords du récipient. Un tel principe d'ouverture a pour avantage d'être fiable, économique par rapport au découpage par outil et de favoriser une répartition plus uniforme de la substance dans le dispositif, notamment lorsque la substance tombe sur un moyen de dosage, tel que par exemple, une vis doseuse ou autre moyen de dosage.

L'invention concerne aussi le dispositif de distribution proprement-dit adapté à la réception de l'élément de recharge prédéfini. Un tel dispositif comprend, en particulier, un sous-ensemble d'approvisionnement en substance qui, lui-même, comprend au moins une zone d'accueil de l'élément de recharge muni d'un logement arrangé pour le glissement de l'élément de recharge selon une configuration uniquement renversée du récipient, le moyen de fermeture formant au moins partiellement le fond de l'élément. Complémentairement, le dispositif comprend au moins un moyen de réception de la substance alimentaire localisé en dessous de l'élément de recharge de façon à permettre de recueillir la substance alimentaire tombant par gravité lors de l'ouverture du moyen de fermeture.

Dans un cas particulier, le dispositif de distribution comprend un moyen de retenue mécanique dans lequel s'engage le moyen d'accrochage mécanique du moyen de fermeture de l'élément de recharge ; ledit moyen de retenue mécanique étant situé à l'entrée du logement. Ainsi, la prise en charge de l'opération d'ouverture de l'élément de recharge en vue de libérer sa substance dans le dispositif est facilitée par des moyens judicieusement placés à l'entrée du dispositif pour profiter ainsi du mouvement d'introduction de l'élément de recharge pour réaliser l'ouverture.

Ces caractéristiques et avantages ainsi que d'autres de l'invention ressortiront de la description détaillée et des dessins donnés à titre d'exemples non limitatifs dans lesquels :
La figure 1 représente une vue schématique en perspective d'un dispositif de distribution de l'invention comprenant deux éléments de recharge en partie insérés ;
La figure 2 montre une vue schématique du principe d'insertion de l'élément de recharge de l'invention dans le dispositif de distribution selon un premier mode de réalisation ;
La figure 3 montre une vue schématique du principe d'insertion de l'élément de recharge de l'invention dans le dispositif de distribution selon un second mode de réalisation ;
La figure 4 est une vue de côté d'un élément de recharge selon le mode de la figure 2 ;
La figure 5 est une vue de face avant de l'élément de la figure 4 ;
La figure 6 est une vue de dessus de l'élément de la figure 4 ;
La figure 7 est une vue de dessus de l'élément de recharge selon le second mode correspondant à la figure 3 ;
La figure 8 est une vue partielle en coupe longitudinale du dispositif de distribution lorsque l'élément de recharge est en place dans le dispositif ;
La figure 9 est une vue en coupe selon la ligne A-A du dispositif représenté à la figure 8 ;
La figure 10 est une vue de côté d'un élément de recharge selon un troisième mode de réalisation possible ;
La figure 11 est une vue de face avant de l'élément de la figure 10 ;
La figure 12 est une vue de dessus de l'élément de la figure 10.

L'invention est maintenant décrite en détail par le biais d'exemples en références aux dessins.

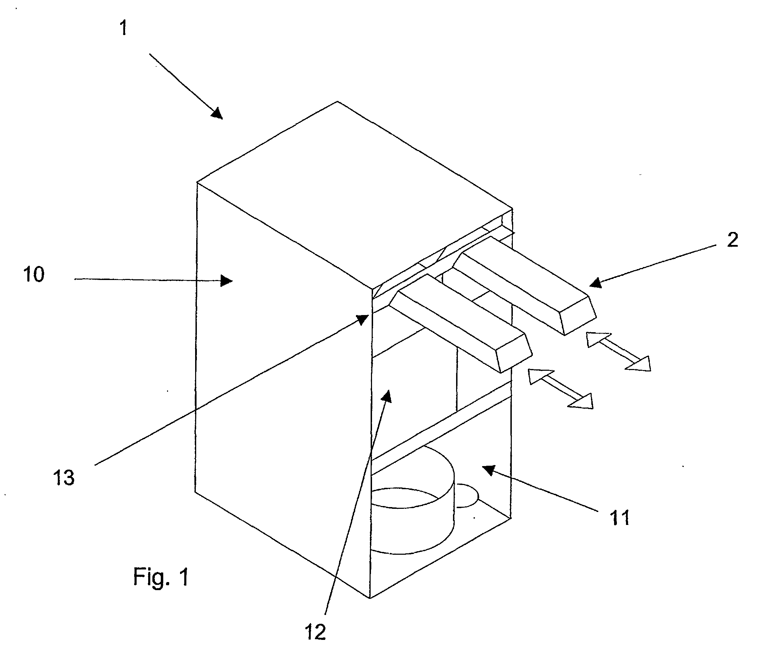

Le dispositif de distribution 1 représenté à la figure 1, à titre d'illustration du mode préféré, est une machine de distribution de boissons chaudes du type café ou autres pouvant être installée dans un espace de faibles dimensions prévu à cet effet, tel que dans l'espace réservé d'un avion, par exemple. Le dispositif comprend un corps 10 formant le châssis du dispositif, une zone ouverte de distribution de la boisson 11 situé à la base du distributeur, un panneau 12 muni de touches de présélection (non représenté) et une zone d'accueil 13 pour l'engagement au glissement d'éléments de recharge 2, ayant la forme de barquettes, selon l'invention.

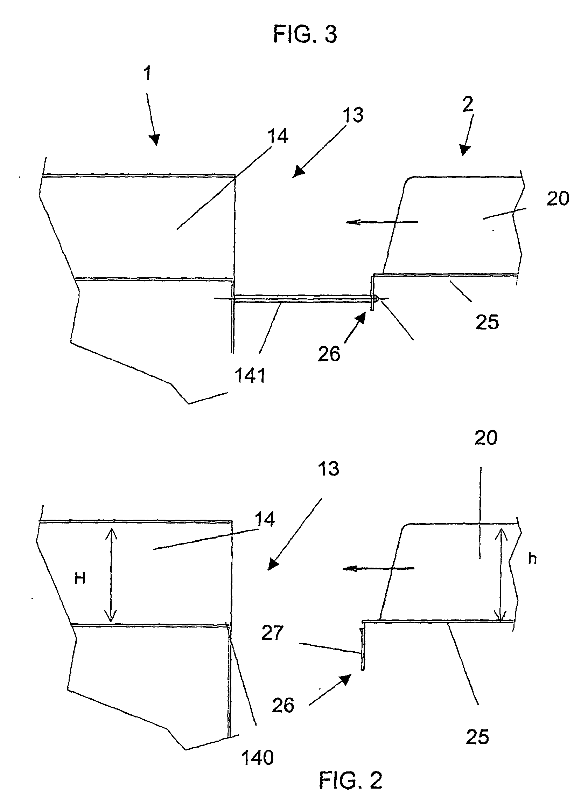

Les figures 2 et 4 à 6 illustrent un premier mode de réalisation de l'invention. L'élément de recharge 2 est destiné à s'insérer dans un logement 14 de forme sensiblement complémentaire ménagé dans la zone de réception 13 du dispositif. L'élément de recharge 2 présente un récipient 20 contenant une certaine quantité de substance à recharger du type café, thé, lait ou autres, sous forme pulvérulente. Selon les dimensions du récipient et le poids spécifique du produit, la quantité de substance contenue dans récipient peut varier. La quantité peut être déterminée en fonction du nombre de doses individuelles de produit destinées à être fournies après dosage par un moyen de dosage du dispositif. Par exemple, un nombre de 1 à 200 doses individuelles peut être envisagé. Le fond de l'élément de recharge est formé d'un moyen de fermeture 25 du récipient ; de sorte que la masse de substance à recharger repose dans cette configuration directement sur le moyen de fermeture. L'assemblage formé par le récipient et le moyen de fermeture définit une enceinte hermétiquement close 23.

De préférence, le moyen de fermeture 25 est un film souple assemblé par adhésion ou par scellage sur les bords 21 du récipient. Les bords latéraux repliés 21 s'étendent préférentiellement sur tout le pourtour du récipient formant la barquette pour favoriser l'appui, la stabilité et le guidage de la barquette dans le dispositif. Il est avantageux dans ce cas d'avoir un moyen de fermeture 25 sous forme d'un film thermoscellé sur les bords latéraux du récipient.

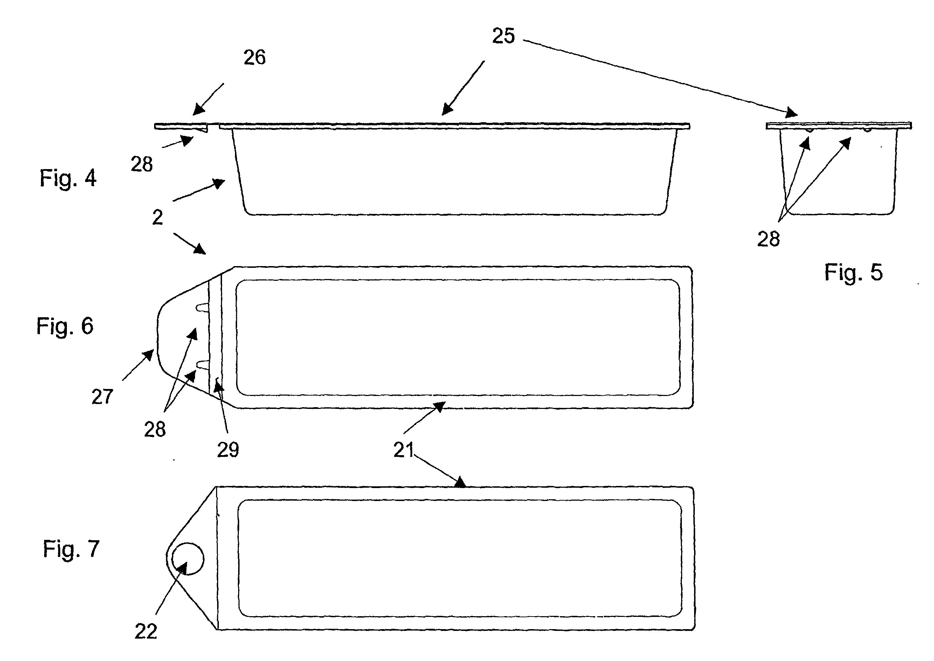

Comme le montre plus particulièrement la figure 2, le moyen de fermeture 25 se prolonge à l'avant de l'élément de recharge par une portion libre 26 qui s'étend, en partie au moins, au-delà du récipient. Par portion libre, il faut entendre, une portion ayant une extrémité libre lorsque le récipient n'est pas encore en engagement dans le dispositif. Cette portion est souple en ce sens qu'elle est repliable contre la surface du moyen de fermeture ou film 25. En pratique, la portion est un simple prolongement du film. Une des particularités de l'invention consiste en ce que la portion 26 comprend un moyen d'accrochage mécanique 27 formé d' au moins une portion saillante 28. La portion saillante 28 forme une butée destinée à s'appuyer sur un bord complémentaire 140 délimitant l'entrée du logement 14 du dispositif de distribution. Le logement 14 possède une paroi supérieure 142 qui définit avec le bord inférieur 140 une hauteur H qui compte tenu des tolérances dimensionnelles permet l'engagement glissant de l'élément de recharge 2 à l'exception du moyen d'accrochage 27. Ainsi, la hauteur H correspond à la hauteur h de l'élément de recharge incluant la hauteur du récipient avec ses bords. Le moyen d'accrochage 27 peut être une plaque en matière plastique semi-rigide ou rigide collée ou soudée, de manière résistante à la délamination, sur le film souple, et interrompue par rapport au bord du récipient de façon à conserver une zone de film souple 29 non couverte et repliable. Comme le montre la figure 4, le moyen d'accrochage 27 comprend deux butées 28 espacées latéralement l'une de l'autre. Dans une variante non représentée, il pourrait s'agir d'un bord saillant continu s'étendant sur toute la largeur de la portion libre 26 ou tout autre moyen équivalent.

L'installation de l'élément de recharge 2 est particulièrement simple puisqu'elle consiste à mettre en place l'avant de l'élément à l'entrée du logement de façon à provoquer le repliement de la portion libre 26 le long de la zone souple 29 et ainsi à permettre d'appliquer la portion saillante 28, orientée vers le bas, en regard du bord 140 du récipient puis à exercer une force suffisante pour enfoncer l'élément de recharge dans son logement ; le détachement du moyen de fermeture 25 se faisant par effet de délamination du film le long des bords scellés 21 du récipient. La délamination peut-être obtenue sur une portion seulement de la longueur du récipient. Dans ce cas, la délamination peut être complétée manuellement. La délamination peut alternativement être réalisée sur toute la longueur du récipient. Il est à noter qu'au fur et à mesure que la délamination intervient, la substance est libérée par gravité dans le dispositif en une position interne par rapport au bord transversal 140. Il n'y a donc aucun risque de déversement à l'extérieur du dispositif.

Comme le montrent les figures 5 et 6, le récipient a la forme d'une barquette allongée ayant une section transversale de forme sensiblement trapézoïdale, la plus grande base se prolongeant dans un plan sensiblement identique par des bords latéraux sur lesquels le moyen de fermeture 25 est relié de manière détachable. La forme transversale spécifique de la barquette est adaptée à la forme du logement de façon à n'autoriser qu'un seul sens d'engagement en éliminant tout risque d'erreur d'engagement.

Les figures 3 et 7 montrent un autre mode de réalisation de l'invention dans lequel le moyen d'accrochage mécanique comprend au moins un trou 22 ménagé dans la portion libre 26 du moyen d'accrochage destiné à s'engager dans une portion de tige complémentaire 141 du dispositif de distribution. L'ouverture du récipient est donc basée sur un principe similaire au cas précédent.

Selon une caractéristique de l'invention, le film souple est, de préférence, réalisé en matériau résistant à l'humidité et résistant au déchirement. Le film est préférablement un laminé comprenant un film d'aluminium doublé intérieurement d'un film en matière thermofusible de façon à promouvoir son assemblage sur les bords du récipient.

Quant au récipient 20, il est préférablement formé à base de matière plastique mise en oeuvre selon un procédé choisi parmi ceux suivants : thermoformage, injection, extrusion-soufflage et injection-soufflage.

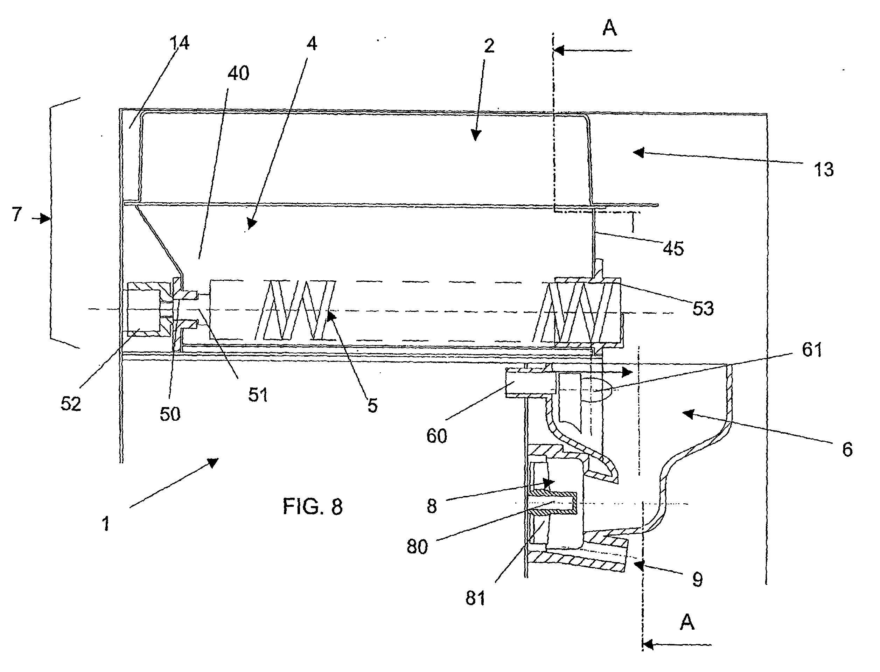

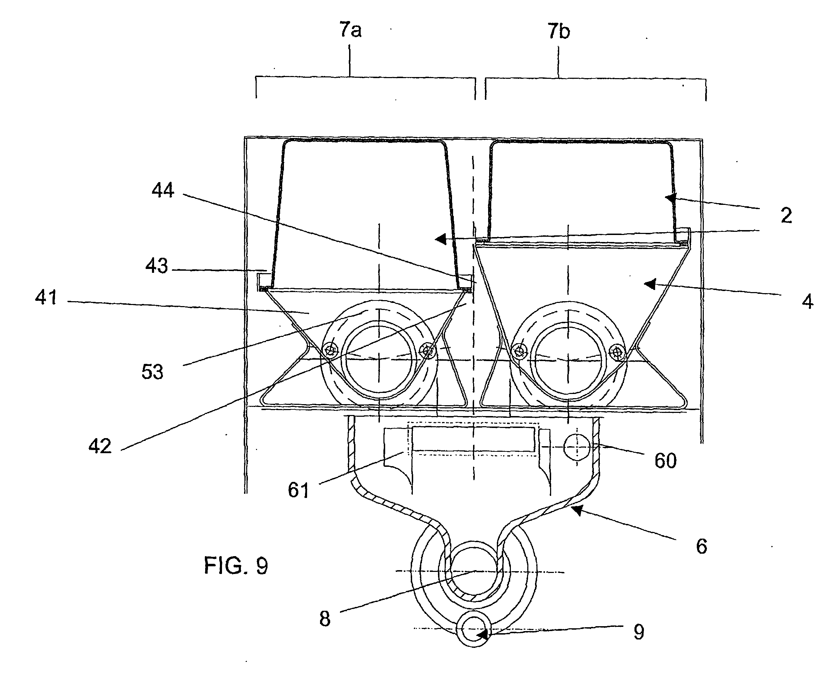

Les figures 8 et 9 illustrent un exemple de dispositif de distribution visé par l'invention.

Le dispositif comprend un sous-ensemble d'approvisionnement 7 en substance pulvérulente. Le sous-ensemble inclut une zone d'accueil 13 formant la partie supérieure du corps du dispositif dans laquelle est arrangé le logement 14 pour recevoir l'élément de recharge 2. L'élément 2 est glissé dans le logement en position renversée ; signifiant que le récipient présente son ouverture orientée vers le bas lorsque débarrassé de son moyen de fermeture. Le logement a une configuration de forme et/ou dimensionnelle telle que l'élément ne puisse pas être introduit dans l'autre sens ; c'est-à-dire avec le moyen de fermeture orienté vers le haut.

En dessous de l'élément de recharge 2 est localisé un moyen de réception 4 de la substance alimentaire qui sert à recueillir la substance tombant par gravité dans le dispositif. De préférence ce moyen de réception est une trémie (encore appelée "canister") munies de bords évasés 40, 41, 42. Lors de l'emploi de substances particulièrement collantes, il peut être nécessaire de prévoir des bords droits afin d'éviter toute agglomération de substance indésirable. Bien entendu, un système annexe destiné à désagréger la poudre peut être ajouté, si nécessaire, tel qu'une roue dentée entraînée par engrenage par rapport à la vis.

Le moyen de réception conduit la substance pulvérulente directement sur un moyen de dosage 5 ayant pour rôle de doser la quantité voulue en substance dans une chambre de mélange 6. Le moyen de dosage est préférentiellement constitué d'une vis doseuse connue de l'état de l'art, située au fond de la trémie. La vis peut être du type à spirale ; c'est à dire comprenant un fil en forme de spirale hélicoïdale. Il peut aussi s'agir d'une vis comprenant un noyau plein structuré extérieurement par une nervure hélicoïdale de pas prédéterminé.

Selon un aspect avantageux de l'invention, la vis doseuse est disposée horizontalement et est sensiblement orientée dans le plan vertical dans lequel s'étend longitudinalement l'élément de recharge 2. Une telle disposition relative de la vis et de l'élément de recharge participe à une bonne répartition de la substance pulvérulente dans le dispositif au moment de sa libération et donc, par conséquent, améliore la précision du dosage.

La vis est en montée sur une portion d'arbre 50 supportée par un palier 51. La portion d'arbre est reliée à un embout 52 destiné à s'associer avec un dispositif d'entraînement motorisé (non représenté). A l'extrémité opposée de la vis, un élément de support 53 est prévu pour maintenir la vis qui comprend une ouverture 53 pour le déversement de la poudre. L'élément est relié par des moyens de fixation sur la paroi avant 45 de la trémie.

Comme le montre la figure 9, plusieurs sous-ensembles d'approvisionnement 7a, 7b sont disposés en parallèle permettant ainsi l'agencement de plusieurs éléments de recharge 2 pouvant contenir des substances pulvérulentes différentes dans le dispositif et communiquant avec un bol de mélange 6 commun. Les éléments de recharge 2 peuvent avoir des volumes différents. L'élément de recharge 2 sont guidés dans leur logement par des moyens de guidage 43, 44 sous forme de rails espacés latéralement assurant un glissement dans un plan sensiblement horizontal. Ces moyens 43, 44 peuvent, comme illustré, avoir des portions de parois horizontales assurant l'appui plan sur les bords 21 des éléments de recharge et des portions verticales assurant le guidage longitudinal ; les portions horizontales et verticales ayant une forme d'équerre.

Le bol de mélange 6 est alimenté par une alimentation en eau 60. Il est possible de prévoir l'alimentation séparée en eau chaude et froide. Le dispositif peut aussi comprendre un système de chauffage propre en eau (non représenté). Des éléments de chicanes et séparation 61 peuvent être avantageusement prévus pour favoriser le mélange des diverses substances.

Le bol se prolonge vers le bas par une chambre de brassage (ou battage) 8 qui comprend un moyen d'agitation. Le moyen d'agitation se présente sous la forme d'un organe rotatif muni d'un rotor 80 et de pales 81. La chambre de brassage est en générale close. Elle a pour fonction de produire une couche de mousse à la surface de la boisson distribuée. Le moyen d'agitation peut être désactivé pour certaines préparations où la production de mousse n'est pas désirée.

Le produit préparé est ensuite distribué au travers d'un conduit de sortie 9 situé en bas de l'appareil.

Dans une variante possible du dispositif non représentée, on peut prévoir un assemblage de plusieurs éléments de recharge selon une configuration d'empilage vertical ; chaque élément étant engagé selon le même principe que celui qui vient d'être décrit. Dans ce cas, tout élément comprenant un élément le recouvrant aura une ouverture de sa surface supérieure pour permettre le passage de la substance de l'élément lui étant supérieur. L'ouverture de sa surface supérieure peut être ainsi prévue selon le même principe que la partie formant le moyen de fermeture. Dans ce cas, le récipient peut avoir deux moyens de fermeture opposés ; l'un formant la surface supérieure de l'élément, l'autre formant la surface inférieure du récipient. L'avantage d'avoir plusieurs élément tient dans la plus grande flexibilité donnée dans la capacité à alimenter le dispositif de distribution en fonction des besoins.

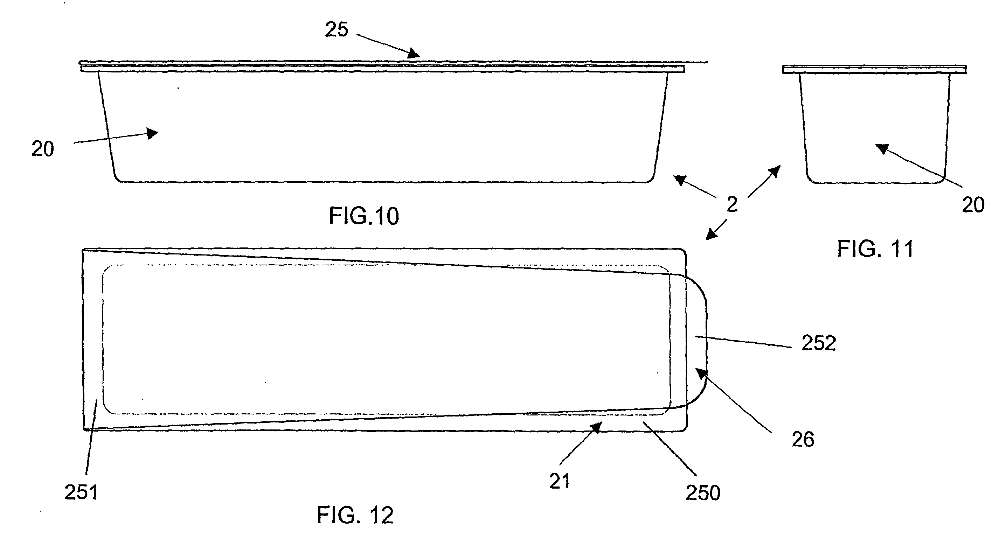

Les figures 10 à 11 montrent des variantes dans laquelle le moyen de fermeture 25 comprend une portion proprement dite de fermeture 250 du récipient et une portion libre 26 superposée par rapport à la portion de fermeture et ayant une première extrémité 251 située du côté d'introduction de l'élément dans le dispositif ; ladite extrémité 251 étant reliée à la portion de fermeture de façon à former un bord replié, et une extrémité opposée 252 prolongeant le récipient, laquelle extrémité est atteignable manuellement après la mise en place de la recharge dans le dispositif.

Par dispositif de distribution automatique, on entend tout type de dispositif de distribution activant un cycle de reconstitution de préparations alimentaires prêtes à la consommation.

L'invention convient pour recharger des substances alimentaires pulvérulentes entrant dans la composition de boissons choisies parmi le café torréfié et moulu, le café soluble, le thé, les boissons chocolatées, le lait, les boissons aromatisées à base de fruits, plantes, sucre, légumineuses et arômes naturels ou artificiels ainsi que les mélanges en toute proportion de ces produits.

Bien entendu, l'invention n'est pas seulement limitée aux modes de réalisation décrits mais peut concerner des variantes pouvant être considérées comme équivalentes et tombant dans la portée des revendications qui suivent.

## Revendications

1. Elément de recharge en substance alimentaire pour dispositif automatique de distribution de boisson, sauce ou autre produit sur demande comprenant un récipient (20) contenant une quantité prédeterminée de la substance à recharger dans le dispositif et un moyen de fermeture (25) coopérant avec le récipient (20) pour former une enceinte close, des moyens (22, 26, 27, 28, 29) permettant le détachement au moins partiel du moyen de fermeture (25) **caractérisé en ce que** comprend une portion libre (26) repliable s'étendant, en partie au moins, au-delà de la limite du récipient (20) et actionable en détachement pour détacher au moins partiellement le moyen de fermeture sous l'effet de l'introduction de l'élément de recharge (2) dans le dispositif de distribution ou après mise en place de l'élément de recharge dans le dispositif, **en ,ce que** l'élément de recharge comprend des moyens de guidage (21) pour s'engager en glissement dans un logement (14) ménagé dans une zone d'accueil (13) du dispositif et est adapté pour s'insérer dans le logement (14) de façon à constituer, une fois mis en place dans le logement (14), une partie d'un sous-ensemble d'approvisionnement en substance du dispositif.

2. Elément de recharge en substance alimentaire selon la revendication 1, **caractérisé en que** la portion libre (26) du moyen de fermeture (25) comprend au moins un moyen d'accrochage mécanique (27) destiné à s'engager avec une partie de retenue (140, 141) du dispositif, complémentaire du moyen d'accrochage mécanique de façon à maintenir la portion libre (26) en place et assurer ainsi le détachement au moins partiel du moyen de fermeture (25) par rapport au récipient (20) lors de l'introduction de l'élément de recharge (2) dans le dispositif de distribution (1).

3. Elément de recharge en substance alimentaire selon la revendication 2, **caractérisé en que** le moyen d'accrochage mécanique (27) comprend au moins une portion saillante (28) formant une butée destinée à s'appuyer sur un bord complémentaire (140) du dispositif de distribution.

4. Elément de recharge en substance alimentaire selon la revendication 2, **caractérisé en que** le moyen d'accrochage mécanique (27) comprend au moins un trou (22) ménagé dans la portion libre (26) du moyen d'accrochage destiné à s'engager dans une portion de tige (141) complémentaire du dispositif de distribution (1).

5. Elément de recharge en substance alimentaire selon la revendication 1, **caractérisé en que** le moyen de fermeture (25) comprend une portion proprement dite de fermeture (250) du récipient et une portion libre superposée par rapport à la portion de fermeture et ayant une première extrémité (251) située du côté d'introduction de l'élément dans le dispositif; ladite extrémité étant reliée à la portion de fermeture de façon à former un bord replié et, une extrémité opposée (252) prolongeant le récipient, laquelle extrémité est atteignable manuellement après mise en place de la recharge dans le dispositif.

6. Elément de recharge en substance alimentaire selon l'une quelconque des revendications précédentes, **caractérisé en que** le moyen de fermeture (25) est un film souple assemblé par adhésion ou scellage sur les bords de guidage (21) du récipient de sorte que le détachement du moyen de fermeture s'opère par délamination d'une portion au moins du film le long des bords du récipient (20).

7. Elément de recharge en substance alimentaire selon la revendication 6, **caractérisé en que** le film souple est réalisé en matériau résistant à l'humidité et résistant au déchirement.

8. Elément de recharge en substance alimentaire selon l'une queléconque des revendications précédentes, **caractérisé en** **que** le récipient (20) a la forme d'une barquette allongée ayant une section transversale de forme sensiblement trapézoïdale, la plus grande base se prolongeant dans un plan sensiblement identique par des bords latéraux (21) sur lesquels le moyen de fermeture (25) est relié de manière détachable.

9. Elément de recharge en substance alimentaire selon la revendication 8, **caractérisé en que** les bords latéraux (21) s'étendent sur le pourtour du récipient (20) formant la barquette.

10. Elément de recharge en substance alimentaire selon la revendication 8 ou 9, **caractérisé en que** le moyen de fermeture (25) comprend un film souple thermoscellé sur les bords latéraux (21) du récipient.

11. Elément de recharge en substance alimentaire selon l'une quelconque des revendications précédentes, **caractérisé en que** le récipient (20) est formé en plastique selon un procédé choisi parmi les techniques suivantes:
thermoformage, injection, extrusion-soufflage et injection-soufflage.

12. Elément de recharge en substance alimentaire selon l'une quelconque des revendications précédentes **caractérisé en qu'**il contient une substance alimentaire pulvérulente pour la préparation de boissons choisie parmi le café torréfié et moulu, le café soluble, le thé, les boissons chocolatées, le lait, les boissons aromatisées à base de fruits, plantes, sucre, légumineuses et arômes naturels ou artificiels ainsi que les mélanges en toute proportion de ces produits.

13. Dispositif de distribution automatique de boissons ou sauce ou autre produit sur demande spécifiquement adapté à la réception d'un élément de recharge (2) défini selon l'une quelconque des revendications 1 à 12, le dispositif ayant au moins un sous-ensemble d'approvisionnement (7) en substance alimentaire, ledit sous-ensemble comprenant:
Au moins une zone d'accueil (13) de l'élément de recharge (2) comprenant un logement (14) arrangé pour l'introduction de l'élément de recharge par l'utilisateur, le guidage et le glissement de l'élément de recharge (2) selon une configuration uniquement renversée du récipient, le moyen de fermeture (25) formant au moins partiellement le fond de l'élément;
au moins un moyen de réception (4) de la substance alimentaire localisée en dessous de l'élément de recharge de façon à permettre de reccueillir la substance alimentaire tombant par gravité lors de l'ouverture du moyen de fermeture (25).

14. Dispositif selon la revendication 13, **caractérisé en ce qu'**il comprend en plus:
un moyen de dosage (5) de la quantité de substance sortant du moyen de réception (4);
un bol de mélange (6) alimenté en eau dans laquelle est distribuée la quantité de substance dosée,
une sortie de distribution (9) permettant la distribution du mélange.

15. Dispositif selon la revendication 14, **caractérisé en ce que** le moyen de dosage (5) est une vis doseuse disposée horizontalement et sensiblement orientée dans le plan vertical dans lequel s'étend longitudinalement l'élément de recharge (2).

16. Dispositif selon l'une quelconque des revendications 13 à 15, **caractérisé en ce que** le logement servant à accueillir l'élément de recharge (2) comprend des moyens de guidage (43, 44) sous forme de deux rails espacés latéralement assurant un glissement dans un plan sensiblement horizontal de l'élément de recharge.

17. Dispositif selon l'une quelconque des revendications 13 à 15, **caractérisé en ce qu'**il comprend un moyen de retenue mécanique (140, 141) dans lequel s'engage le moyen d'accrochage mécanique (27) du moyen de fermeture (25) de l'élément de recharge; ledit moyen de retenue mécanique (27) étant situé à l'entrée du logement.

18. Dispositif selon la revendication 17, **caractérisé en ce que** le moyen de retenue mécanique se présente sous la forme d'au moins une portion de bord transversal (140) dans laquelle le moyen d'accrochage (27) vient en butée lors de l'introduction de l'élément de recharge dans le logement.

19. Dispositif selon la revendication 17, **caractérisé en ce que** le moyen de retenue mécanique se présente sous la forme d'au moins une portion de tige en relief (141) dans laquelle le moyen d'accrochage s'engage lors de l'introduction de l'élément de recharge dans le logement (14).

20. Dispositif selon l'une quelconque des revendications 13 à 19, **caractérisé en ce que** le moyen de réception (4) de la substance est une trémie à bords évasés ou entonnoir.

21. Dispositif selon l'une quelconque des revendications 13 à 20, **caractérisé en ce qu'**il comprend plusieurs sous-ensembles d'approvisionnement (7a, 7b) disposés en parallèle permettant l'agencement de plusieurs éléments de recharge (2) contenant des substances différentes dans le dispositif et communiquant avec un bol de mélange commun (6) alimenté en eau.

22. Dispositif selon la revendication 21, **caractérisé en ce qu'**il comprend en plus une chambre de brassage (8) comprenant un moyen d'agitation pour la production de mousse; laquelle chambre est localisée entre le bol de mélange (6) et la sortie de distribution (9) du produit sur demande.

23. Dispositif selon l'une quelconque des revendications 13 à 22, **caractérisé en ce qu'**il comprend un arrangement de plusieurs éléments disposés selon un empilage vertical.

24. Dispositif de distribution de boisson comprenant un appareil de distribution (1) et au moins une cartouche (2) pour la recharge en substance alimentaire pulvérulente **caractérisé en ce que**
La cartouche (2) comprend un récipient allongé (20) contenant la substance pulvérulente, des moyens de guidage (21) et un film pelable (25) formant le fond de la cartouche, le film étant préalablément assemblé par scellage ou collage sur les bords (21) du récipient; le film comprenant une portion avant libre (26) pliable, munie des moyens d'accrochage mécanique (27),
et **en ce que** l'appareil de distribution (1) comprend un logement de réception (14) de la cartouche arrangé pour le guidage et le glissement de la cartouche selon une configuration uniquement renversée du récipient (20) et des moyens de retenue (140, 141) qui s'engagent au moment de l'introduction de la cartouche (2) dans le logement (14) et retiennent la portion avant libre pliable (26) de sorte que le mouvement d'introduction de la cartouche dans le logement provoque la délamination du film (25) et par conséquent la libération par gravité de la substance dans l'appareil de distribution

## Patentansprüche

1. Kartusche zum Nachfüllen einer Nahrungsmittelsubstanz für eine Vorrichtung zur automatischen Abgabe eines Getränks, einer Soße oder eines anderen Produkts auf Verlangen, umfassend einen Behälter (20), der eine vorbestimmte Menge der in die Vorrichtung nachzufüllenden Substanz enthält, und ein Verschlußmittel (25), das mit dem Behälter (20) zusammenwirkt, um ein geschlossenes Gehäuse zu bilden, sowie Mittel (22, 26, 27, 28, 29), die das mindestens partielle Ablösen des Verschlußmittels (25) gestatten, **dadurch gekennzeichnet, daß** das Verschlußmittel einen freien umklappbaren Teil (26) aufweist, der sich zumindest teilweise außerhalb der Umgrenzung des Behälters (20) erstreckt und zum Zweck der Ablösung betätigbar ist, um das Verschlußmittel unter der Einwirkung der Einführung der Nachfüllkartusche (2) in die Abgabevorrichtung oder nach Einsetzen der Nachfüllkartusche in die Vorrichtung mindestens teilweise abzulösen, und daß die Nachfüllkartusche Führungsmittel (21) zum Einschieben in eine in einem Aufnahmebereich (13) der Vorrichtung vorgesehene Aussparung (14) aufweist und so ausgelegt ist, daß sie in die Aussparung (14) so eingesetzt werden kann, daß sie nach Einsetzen in die Aussparung (14) einen Teil einer Untereinheit zur Versorgung der Vorrichtung mit Substanz bildet.

2. Nachfüllkartusche für eine Nahrungsmittelsubstanz nach Anspruch 1, **dadurch gekennzeichnet, daß** der freie Teil (26) des Verschlußmittels (25) mindestens ein mechanisches Einhakmittel (27) aufweist, das dazu bestimmt ist, mit einem Rückhalteteil (140, 141) der Vorrichtung in Eingriff zu kommen, das zu dem mechanischen Einhakmittel ergänzend ist, so daß der freie Teil (26) an seinem Platz gehalten wird und auf diese Weise das zumindest partielle Ablösen des Verschlußmittels (25) vom Behälter (20) bei der Einführung der Nachfüllkartusche (2) in die Abgabevorrichtung (1) gewährleistet wird.

3. Nachfüllkartusche für eine Nahrungsmittelsubstanz nach Anspruch 2, **dadurch gekennzeichnet, daß** das mechanische Einhakmittel (27) mindestens einen vorstehenden Teil (28) aufweist, der einen Anschlag bildet, der dazu bestimmt ist, sich an einem ergänzenden Rand (140) der Abgabevorrichtung abzustützen.

4. Nachfüllkartusche für eine Nahrungsmittelsubstanz nach Anspruch 2, **dadurch gekennzeichnet, daß** das mechanische Einhakmittel (27) mindestens ein Loch (22) aufweist, das in dem freien Teil (26) des Einhakmittels vorgesehen ist und dazu bestimmt ist, auf einen ergänzenden Stangenabschnitt (141) der Abgabevorrichtung (1) aufgesteckt zu werden.

5. Nachfüllkartusche für eine Nahrungsmittelsubstanz nach Anspruch 1, **dadurch gekennzeichnet, daß** das Verschlußmittel (25) einen eigentlichen Verschlußteil (250) für den Behälter und einen dem Verschlußteils überlagerten freien Teil aufweist, der ein erstes Ende (251) besitzt, das auf der Seite der Einführung der Kartusche in die Vorrichtung vorgesehen ist und mit dem Verschlußteil so verbunden ist, daß ein abgewinkelter Rand gebildet wird, sowie ein entgegengesetztes Ende (252), das den Behälter verlängert und nach Einsetzen der Nachfüllkartusche in die Vorrichtung manuell erreichbar ist.

6. Nachfüllkartusche für eine Nahrungsmittelsubstanz nach einem der vorhergehenden Ansprüche, **dadurch gekennzeichnet, daß** das Verschlußmittel (25) eine biegsame Folie ist, die durch Haftung oder Siegelung an die Führungsränder (21) des Behälters so angefügt ist, daß das Ablösen des Verschlußmittels durch Abziehen mindestens eines Teils der Folie längs der Ränder des Behälters (20) vor sich geht.

7. Nachfüllkartusche für eine Nahrungsmittelsubstanz nach Anspruch 6, **dadurch gekennzeichnet, daß** die biegsame Folie aus einem feuchtigkeitsfesten und reißfesten Werkstoff hergestellt ist.

8. Nachfüllkartusche für eine Nahrungsmittelsubstanz nach einem der vorhergehenden Ansprüche, **dadurch gekennzeichnet, daß** der Behälter (20) die Form einer langgestreckten Schale mit einem im wesentlichen trapezförmigen Querschnitt hat, wobei die größere Basis im wesentlichen in derselben Ebene durch seitliche Ränder (21) verlängert ist, mit denen das Verschlußmittel (25) ablösbar verbunden ist.

9. Nachfüllkartusche für eine Nahrungsmittelsubstanz nach Anspruch 8, **dadurch gekennzeichnet, daß** die seitlichen Ränder (21) sich über den Umfang des die Schale bildenden Behälters (20) erstrecken.

10. Nachfüllkartusche für eine Nahrungsmittelsubstanz nach Anspruch 8 oder 9, **dadurch gekennzeichnet, daß** das Verschlußmittel (25) eine biegsame Folie umfaßt, die auf den seitlichen Rändern (21) heißgesiegelt ist.

11. Nachfüllkartusche für eine Nahrungsmittelsubstanz nach einem der vorhergehenden Ansprüche, **dadurch gekennzeichnet, daß** der Behälter (20) aus Kunststoff nach einem Verfahren hergestellt ist, das aus den folgenden Techniken ausgewählt ist:
Warmformung, Spritzguß, Extrusionsblasen und Spritzblasen.

12. Nachfüllkartusche für eine Nahrungsmittelsubstanz nach einem der vorhergehenden Ansprüche, **dadurch gekennzeichnet, daß** sie eine pulverförmige Nahrungsmittelsubstanz für die Herstellung von Getränken enthält, die ausgewählt ist aus geröstetem und gemahlenem Kaffee, löslichem Kaffee, Tee, Schokoladegetränken, Milch, aromatisierten Getränken auf der Grundlage von Früchten, Pflanzen, Zucker, Hülsenfrüchten und natürlichen oder künstlichen Aromastoffen sowie den Mischungen dieser Produkte in jedem Verhältnis.

13. Vorrichtung zur automatischen Abgabe von Getränken, Soße oder einem anderen Produkt auf Verlangen, die speziell für die Aufnahme einer Nachfüllkartusche (2) gemäß einem der Ansprüche 1 bis 12 ausgelegt ist, wobei die Vorrichtung mindestens eine Untereinheit (7) zur Versorgung mit Nahrungsmittelsubstanz aufweist, die folgendes umfaßt:
mindestens einen Aufnahmebereich (13) für die Nachfüllkartusche (2), der eine Aussparung (14) aufweist, die für die Einführung der Nachfüllkartusche durch den Benutzer, das Führen und das Gleiten der Nachfüllkartusche (2) in einer ausschließlich umgekehrten Stellung des Behälters ausgelegt ist, wobei das Verschlußmittel (25) mindestens teilweise den Boden der Kartusche bildet;
mindestens ein Mittel (4) zur Aufnahme der Nahrungsmittelsubstanz, das unter der Nachfüllkartusche so angeordnet ist, daß es die Aufnahme der bei der Öffnung des Verschlußmittels (25) durch Schwerkraft herabfallenden Nahrungsmittelsubstanz gestattet.

14. Vorrichtung nach Anspruch 13, **dadurch gekennzeichnet, daß** sie außerdem folgendes umfaßt:
ein Mittel (5) zum Zudosieren der aus dem Aufnahmemittel (4) austretenden Substanzmenge;
eine mit Wasser versorgte Mischschale (6), die die die zudosierte Substanzmenge abgegeben wird; und
einen Abgabeaustritt (9) für die Abgabe der Mischung.

15. Vorrichtung nach Anspruch 14, **dadurch gekennzeichnet, daß** das Zudosiermittel (5) eine horizontal angeordnete Dosierschnecke ist, die im wesentlichen in der vertikalen Ebene ausgerichtet ist, in der sich die Nachfüllkartusche (2) in Längsrichtung erstreckt.

16. Vorrichtung nach einem der Ansprüche 13 bis 15, **dadurch gekennzeichnet, daß** die zur Aufnahme der Nachfüllkartusche (2) dienende Aussparung Führungsmittel (43, 44) in Form von zwei seitlich in einem Abstand voneinander angeordneten Schienen aufweist, die ein Gleiten der Nachfüllkartusche in einer im wesentlichen horizontalen Ebene gestatten.

17. Vorrichtung nach einem der Ansprüche 13 bis 15, **dadurch gekennzeichnet, daß** sie ein mechanisches Rückhaltemittel (140, 141) aufweist, in das das mechanische Einhakmittel (27) des Verschlußmittels (25) der Nachfüllkartusche eintritt, wobei dieses mechanische Rückhaltemittel (27) am Eintritt der Aussparung gelegen ist.

18. Vorrichtung nach Anspruch 17, **dadurch gekennzeichnet, daß** das mechanische Rückhaltemittel in Form mindestens eines Querrandteils (140) vorliegt, in dem das Einhakmittel (27) bei der Einführung der Nachfüllkartusche in die Aussparung zum Anschlag kommt.

19. Vorrichtung nach Anspruch 17, **dadurch gekennzeichnet, daß** das mechanische Rückhaltemittel in Form mindestens eines vorstehenden Stangenteils (141) vorliegt, auf den das Einhakmittel bei der Einführung der Nachfüllkartusche in die Aussparung (14) aufgesteckt wird.

20. Vorrichtung nach einem der Ansprüche 13 bis 19, **dadurch gekennzeichnet, daß** das Mittel (4) zur Aufnahme der Substanz ein Abgabebehälter mit ausgeweiteten Rändern oder Trichter ist.

21. Vorrichtung nach einem der Ansprüche 13 bis 20, **dadurch gekennzeichnet, daß** sie mehrere parallel angeordnete Versorgungsuntereinheiten (7a, 7b) aufweist, die das Anordnen von mehreren, verschiedene Substanzen enthaltenden Nachfüllkartuschen (2) in der Vorrichtung gestatten und mit einer gemeinsamen, mit Wasser versorgten Mischschale (6) in Verbindung stehen.

22. Vorrichtung nach Anspruch 21, **dadurch gekennzeichnet, daß** sie außerdem eine Rührkammer (8) mit einem Rührmittel zur Erzeugung von Schaum umfasst, die zwischen der Mischschale (6) und dem Austritt (9) zur Abgabe des Produkts auf Verlangen angeordnet ist.

23. Vorrichtung nach einem der Ansprüche 13 bis 22, **dadurch gekennzeichnet, daß** sie einen Satz von mehreren Kartuschen umfaßt, die in einem vertikalen Stapel angeordnet sind.

24. Vorrichtung zur Getränkeabgabe mit einer Abgabeeinrichtung (1) und mindestens einer Nachfüllkartusche (2) für eine pulverförmige Nahrungsmittelsubstanz, **dadurch gekennzeichnet, daß** die Kartusche (2) einen langgestreckten, die pulverförmige Substanz enthaltenden Behälter (20), Führungsmittel (21) und eine den Boden der Kartusche bildende abziehbare Folie (25) umfaßt, wobei die Folie zuvor durch Siegeln oder Kleben an den Rändern (21) des Behälters angebracht wurde und einen umbiegbaren freien vorderen Teil (26) aufweist, der mit mechanischen Einhakmitteln (27) versehen ist,
und daß die Abgabevorrichtung (1) eine Aussparung (14) zur Aufnahme der Kartusche, die zum Führen und Gleiten der Kartusche in einer ausschließlich umgekehrten Stellung des Behälters (20) ausgelegt ist, und Rückhaltemittel (140, 141) aufweist, die zum Zeitpunkt der Einführung der Kartusche (2) in die Aussparung (14) ineinandergreifen und den umbiegbaren freien vorderen Teil (26) zurückhalten, so daß die Einführungsbewegung der Kartusche in die Aussparung das Abziehen der Folie (35) und infolgedessen die Freigabe der Substanz durch Schwerkraft in die Abgabeeinrichtung bewirkt.

## Claims

1. Element for refilling a foodstuffs substance for an automatic distribution device for a drink, sauce or other product on demand, comprising a container (20) which contains a predetermined quantity of the substance to be refilled in the device and a means (25) for closure which co-operates with the container (20) in order to form a closed enclosure, means (22, 26, 27, 28, 29) permitting at least partial detachment of the means (25) for closure, **characterised in that** the means for closure comprises a free portion (26) which can be folded and extends at least partially beyond the limit of the container (20) and can be actuated in order to detach the means for closure at least partially under the effect of introduction of the refilling element (2) into the distribution device or after putting the refilling element into place in the device, **in that** the refilling element comprises means (21) for guiding in order to be engaged by being slid in a receptacle (14) provided in an area of accommodation (13) of the device and is designed to be inserted in the receptacle (14) such as to constitute, once it has been put into place in the receptacle (14), part of a sub-assembly for supply of substance to the device.

2. Element according to claim 1 for refilling a foodstuffs substance, **characterised in that** the free portion (26) of the means (25) for closure comprises at least one means (27) for mechanical coupling which is designed to be engaged with a retention part (140, 141) of the device, which is complementary to the means for mechanical coupling such as to keep the free portion (26) in place and thus to assure at least partial detachment of the means (25) for closure relative to the container (20) during introduction of the refilling element (2) in the distribution device (1).

3. Element according to claim 2 for refilling a foodstuffs substance, **characterised in that** the means (27) for mechanical coupling comprises at least one projecting portion (28) which forms a stop designed to be supported on a complementary edge (140) of the distribution device.

4. Element according to claim 2 for refilling a foodstuffs substance, **characterised in that** the means (27) for mechanical coupling comprises at least one hole (22) provided in the free portion (26) of the means for coupling which hole is designed to be engaged in a complementary portion of rod (141) of the distribution device (1).

5. Element according to claim 1 for refilling a foodstuffs substance, **characterised in that** the means for closure (25) comprises a so-called closure portion (250) of the container and a free portion which is superimposed relative to the closure portion and has a first end (251) which is situated on the side of introduction of the element into the device; the said end being connected to the closure portion such as to form a folded edge, and an opposite end (252) which extends the container, which end can be reached manually after the refill has been put into place in the device.

6. Element according to any one of the preceding claims for refilling a foodstuffs substance, **characterised in that** the means for closure (25) is a flexible film which is assembled by adhesion or sealing on the guiding edges (21) of the container such that the means for closure is detached by delamination of at least one portion of the film along the edges of the container (20).

7. Element according to claim 6 for refilling a foodstuffs substance, **characterised in that** the flexible film is made of material which is resistant to humidity and tearing.

8. Element according to any one of the preceding claims for refilling a foodstuffs substance, **characterised in that** the container (20) is in the form of an elongate tray with a substantially trapezoidal cross-section, the largest base being extended on a substantially identical plane by lateral edges (21) to which the means (25) for closure is connected in a detachable manner.

9. Element according to claim 8 for refilling a foodstuffs substance, **characterised in that** the lateral edges (21) extend around the periphery of the container (20) which forms the tray.

10. Element according to claim 8 or claim 9 for refilling a foodstuffs substance, **characterised in that** the means (25) for closure comprises a flexible film which is heat sealed onto the lateral edges (21) of the container.

11. Element according to any one of the preceding claims for refilling a foodstuffs substance, **characterised in that** the container (20) is made of plastic according to a method selected from amongst the following techniques:
thermoforming, injection, extrusion-blow moulding and injection-blow moulding.

12. Element according to any one of the preceding claims for refilling a foodstuffs substance, **characterised in that** it contains a powdered foodstuffs substance for preparation of drinks selected from amongst roasted ground coffee, soluble coffee, tea, chocolate flavoured drinks, milk, fruit-based flavoured drinks, plants, sugar, leguminous plants and natural and artificial flavourings, as well as mixtures of these products in any proportion.

13. Device for automatic distribution of drinks or sauce or other products on demand, which is specifically designed for receipt of a refill element (2) defined according to any one of claims 1 to 12, the device having at least one sub-assembly (7) to supply the foodstuffs substance, the said sub-assembly comprising:
at least one area (13) for accommodation of the refill element (2) comprising a receptacle (14) which is arranged for introduction of the refill element by the user, and guiding and sliding of the refill element (2) according to a solely overturned configuration of the container, the means (25) for closure forming at least partially the base of the element;
at least one means (4) for receipt of the foodstuffs substance being located beneath the refill element such as to make it possible to receive the foodstuffs substance which falls by gravity during opening of the means (25) for closure.

14. Device according to claim 13, **characterised in that** it comprises in addition:
a means (5) for apportioning the quantity of substance discharged from the means (4) for receipt;
a mixing bowl (6) which is supplied with water in which the quantity of substance apportioned is distributed; and
a distribution output (9) which permits distribution of the mixture.

15. Device according to claim 14, **characterised in that** the means (5) for apportioning is a metering screw which is disposed horizontally and is oriented substantially in the vertical plane, in which the refill element (2) extends longitudinally.

16. Device according to any one of claims 13 to 15, **characterised in that** the receptacle which is used to accommodate the refill element (2) comprises means (43, 44) for guiding in the form of two rails which are spaced laterally, thus assuring sliding of the refill element in a substantially horizontal plane.

17. Device according to any one of claims 13 to 15, **characterised in that** it comprises a means (140, 141) for mechanical retention in which there is engaged the means (27) for mechanical coupling of the means (25) for closure of the refill element; the said means (27) for mechanical retention being situated at the intake of the receptacle.

18. Device according to claim 17, **characterised in that** the means for mechanical retention is in the form of at least one portion of transverse edge (140) in which the means (27) for coupling abuts during introduction of the refill element into the receptacle.

19. Device according to claim 17, **characterised in that** the means for mechanical retention is in the form of at least one portion of rod in relief (141) in which the means for coupling engages during introduction of the refill element into the receptacle (14).

20. Device according to any one of claims 13 to 19, **characterised in that** the means (4) for receipt of the substance is a cone with splayed edges or a funnel.

21. Device according to any one of claims 13 to 20, **characterised in that** it comprises a plurality of supply sub-assemblies (7a, 7b) which are disposed in parallel and permit fitting of a plurality of refill elements (2) in the device, which contain different substances and communicate with a common mixing bowl (6) supplied with water.

22. Device according to claim 21, **characterised in that** it comprises in addition a mixing chamber (8) comprising a means for agitation for production of foam; this chamber is located between the mixing bowl (6) and the output (9) for distribution of the product on demand.

23. Device according to any one of claims 13 to 22, **characterised in that** it comprises an arrangement of a plurality of elements disposed according to vertical stacking.

24. Device for distribution of a drink comprising a distribution device (1) and at least one cartridge (2) for refilling with powdered foodstuffs substance, **characterised in that** the cartridge (2) comprises an elongate container (20) which contains the powdered substance, means (21) for guiding and a film (25) which can be peeled and forms the base of the cartridge, the film previously being assembled by sealing or gluing onto the edges (21) of the container; the film comprising a free front portion (26) which can be folded and is provided with means (27) for mechanical coupling, and **in that** the distribution device (1) comprises a receptacle (14) for receipt of the cartridge which is arranged for guiding and sliding of the cartridge according to a solely overturned configuration of the container (20), and means (140, 141) for retention which engage at the moment of introduction of the cartridge (2) in the receptacle (14) and retain the free front portion (26) which can be folded, such that the movement of introduction of the cartridge into the receptacle gives rise to delamination of the film (25) and consequently release by gravity of the substance into the distribution device.
